# EUROPEAN PATENT APPLICATION

(11) **EP 2 980 749 A1**
(43) Date of publication of application: **03.02.2016**
(21) Application number: 15179278.5
(22) Date of filing: 31.07.2015
(51) Int. Cl.: G06Q 50/02, G06F 17/30

(54) **SYSTEM AND METHOD OF FACILITATING THE RETRIEVAL AND ANALYSIS OF DATA**

(30) Priority: 31.07.2014 US 201462031467 P
(71) Applicant: Services Pétroliers Schlumberger, 75007 Paris (FR); Logined B.V., 2586 BJ S Gravenhage (NL)
(72) Inventor: PLOST, Brandon, Houston, TX Texas 77031 (US); D'SOUZA, Daniel Gabriel, Houston, TX Texas 77027 (US); KARR, George, Lago Vista, TX Texas 78645 (US)
(74) Representative: Li, Boxi

(57) **Abstract**

The present disclosure describes a system, method, and computer readable medium capable of providing a data analysis/visualization application through which the user may seamlessly retrieve and analyze data from a variety of sources using a single interface. In one embodiment, this may be accomplished by applying data designations to at least a portion of the stored oilfield data and using the data designations to search for and retrieve oilfield data of interest to the user. In one embodiment, the data designations, and their association(s) with the oilfield data, may facilitate the retrieval and display of related actions such as calculations, alarms, workflow(s), notifications and unit conversions. In one embodiment, data designations may include one or more metadata flags applied to one or more pieces of oilfield data.

## Description

### CROSS REFERENCE TO RELATED APPLICATIONS

This patent application claims priority upon and incorporates by reference herein, a provisional patent application entitled "Using Metadata as a Synchronization Point in Real Time Systems," filed on July 31, 2014, serial number 62/031,467.

### BACKGROUND

Oilfield operations generate a great deal of electronic data. Such data may be used to access oilfield conditions and make decisions concerning future oilfield operations such as well planning, well targeting, well completions, production rates, and other operations and/or operating parameters. Often this information is used to determine when (and/or where) to drill new wells, re-complete existing wells, and/or alter oilfield production parameters.

Oilfield data may be collected using sensors positioned throughout the oilfield. For example, sensors on the surface may monitor seismic exploration activities, sensors in the drilling equipment may monitor drilling conditions, sensors in the wellbore may monitor fluid composition, sensors located along the flow path may monitor flow rates, and sensors at the processing facility may monitor fluids collected.

The analysis of oilfield data can be a daunting prospect due to the amount of data involved and the inadequacies of known data analysis applications. This may be especially true for large oilfield operations having multiple wells and/or reservoirs. Known data analysis applications may require the user to expend a considerable amount of energy trying to locate and select data of interest. Further, the user's ability to solve and analyze certain types of problems may be hampered by data storage limitations and/or interface limitations inherent to the data analysis application(s) in question.

As such, there remains a need for a system, method and computer readable medium capable of efficiently and effectively providing the user with a wide variety of oilfield data for review and analysis.

### SUMMARY

Accordingly, the present disclosure describes a system, method, and computer readable medium capable of providing a data analysis/visualization application through which the user may seamlessly retrieve and analyze data from a variety of sources using a single interface.

In one embodiment, this may be accomplished by applying data designations to at least a portion of the stored oilfield data and using the data designations to search for and retrieve oilfield data of interest to the user. In one embodiment, the data designations, and their association(s) with the oilfield data, may also be used to facilitate the retrieval and display of related actions such as calculations, alarms, workflows, notifications and unit conversions. In one embodiment, data designations may include one or more metadata flags applied to one or more pieces of oilfield data.

In one embodiment, retrieved oilfield data may be used to generate one or more graphical representation(s). In one embodiment, a data visualization application capable of accessing, filtering and displaying oilfield data upon one or more graphic user interfaces may be utilized. The visualizations may also be associated with data designations (e.g., metadata flags) as opposed to conventional oilfield data tags.

This summary is provided to introduce a selection of concepts in a simplified form that are further described herein. This summary is not intended to identify key or essential features of the claimed subject matter, nor is it intended to be used as an aid in determining the scope of the claimed subject matter.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings; it being understood that the drawings contained herein are not necessarily drawn to scale and that the accompanying drawings provide illustrative implementations and are not meant to limit the scope of various technologies described herein; wherein:
Figure 1.1 is an example oilfield survey operation being performed by a seismic truck.
Figure 1.2 is an example oilfield drilling operation being performed by a drilling tool suspended by a rig and advanced into the subterranean formation.
Figure 1.3 is an example oilfield wireline operation being performed by a wireline tool suspended by the rig and into the wellbore of Figure 1.2.
Figure 1.4 is an example oilfield operation being performed by a production tool deployed from the rig and into a completed wellbore for drawing fluid from the downhole reservoir into a surface facility.
Figure 2.1 is an example oilfield seismic trace of the subterranean formation of Figure 1.1.
Figure 2.2 is an example oilfield core sample of the example formation shown in Figure 1.2.
Figure 2.3 is an example oilfield well log of the subterranean formation of Figure 1.3.
Figure 2.4 is an example simulation decline curve of fluid flowing through the example subterranean formation of Figure 1.4.
Figure 3 is a schematic view, partially in cross section, of an example oilfield operation having a plurality of data acquisition tools positioned at various locations along the oilfield operation for collecting data from the subterranean formation.
Figure 4 is an example schematic view of an oilfield operation having a plurality of wellsites for producing hydrocarbons from the subterranean formation.
Figure 5 is a flowchart diagram illustrating an oilfield data selection and retrieval process of one example embodiment.
Figure 6 is an example data designation mapping arrangement.
Figure 7 is an example data designation arrangement applied to example oilfield data.
Figure 8 is an example data analysis application architecture.
Figure 9 is an example data designation visualization applied to example oilfield data.
Figure 10 is an example data designation arrangement applied to example oilfield data and related actions.
Figure 11 is an example alarm action associated with example data designations.
Figure 12 is an example computer system that may be utilized in conjunction with one or more embodiments.

### DETAILED DESCRIPTION

In the following description, numerous details are set forth to provide an understanding of the present invention. However, it will be understood by those skilled in the art that the inventions described herein may be practiced without these details and that numerous variations or modifications from the described embodiments may be possible.

The present disclosure describes embodiments of a method of facilitating the retrieval and analysis of oilfield data, a computer readable medium for facilitating the retrieval and analysis of oilfield data and an oilfield data retrieval and analysis system.

By way of background, Figures 1.1-1.4 illustrate simplified, schematic views of oilfield (100) having subterranean formation (102) containing reservoir (104) therein in accordance with implementations of various technologies and techniques described herein.

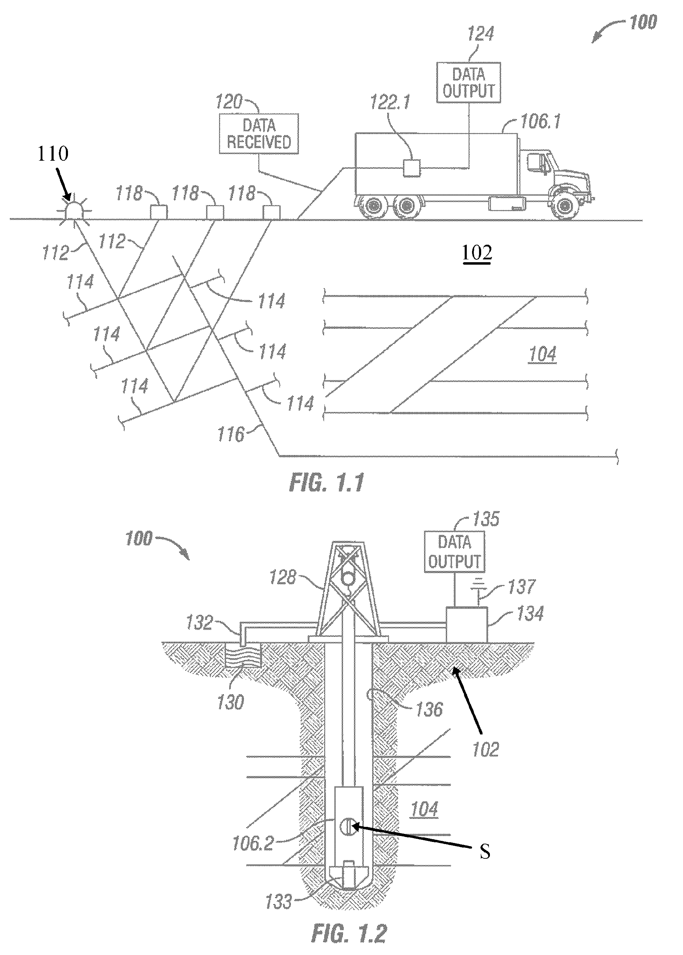

Figure 1.1 illustrates a survey operation being performed by a survey tool, such as seismic truck (106.1), to measure properties of the subterranean formation. In this example, the survey operation is a seismic survey operation for producing sound vibrations. In Figure 1.1, sound vibrations (112) generated by source (110), reflects off horizons (114) in earth formation (116). A set of sound vibrations is received by sensors, such as geophone-receivers (118), situated on the earth's surface. The data received (120) is provided as input data to a computer (122.1) of a seismic truck (106.1), and responsive to the input data, computer (122.1) generates seismic data output (124). This seismic data output may be stored, transmitted or further processed as desired, for example, by data reduction.

Figure 1.2 illustrates a drilling operation being performed by drilling tool (106.2) suspended by rig (128) and advanced into subterranean formations (102) to form wellbore (136). Mud pit (130) is used to draw drilling mud into the drilling tools via flow line (132) for circulating drilling mud down through the drilling tools, then up wellbore (136) and back to the surface. The drilling mud may be filtered and returned to the mud pit.

A circulating system may be used for storing, controlling, or filtering the drilling mud. The drilling tools are advanced into subterranean formations (102) to reach reservoir (104). Each well may target one or more reservoirs. The drilling tools may be adapted for measuring downhole properties using logging while drilling tools. The logging while drilling tools may also be adapted for taking core sample (133).

Computer facilities may be positioned at various locations about the oilfield (100) (e.g., the surface unit 134) and/or at remote locations. Surface unit (134) may be used to communicate with the drilling tools and/or offsite operations, as well as with other surface or downhole sensors. Surface unit is capable of communicating with the drilling tools to send commands to the drilling tools, and to receive data therefrom. Surface unit may also collect data generated during the drilling operation and produces data output (135), which may then be stored or transmitted.

Sensors (S), such as gauges, may be positioned about oilfield (100) to collect data relating to various oilfield operations as described previously. In this example, sensor (S) may be positioned in one or more locations in the drilling tools and/or at rig (128) to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools (106.2) may include a bottom hole assembly (BHA) (not shown) near the drill bit (e.g., within several drill collar lengths from the drill bit). The bottom hole assembly may include capabilities for measuring, processing, and storing information, as well as communicating with the surface unit. The bottom hole assembly further may further include drill collars for performing various other measurement functions.

The data gathered by sensors (S) may be collected by the surface unit and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit (134) may include transceiver (137) to allow communications between surface unit (134) and various portions of the oilfield (100) or other locations. The surface unit may also be provided with one or more controllers (not shown) for actuating mechanisms at the oilfield. The surface unit may then send command signals to the oilfield in response to data received.

The surface unit may receive commands via transceiver (137) or may itself execute commands to the controller. A processor may be provided to analyze the data (locally or remotely), make the decisions and/or actuate the controller. In this manner, the oilfield may be selectively adjusted based on the data that is collected and analyzed. This technique may be used to optimize portions of the field operation, such as controlling drilling, weight on bit, pump rates, or other parameters. These adjustments may be made automatically based on computer protocol, and/or manually by an operator. In some cases, well plans may be adjusted to select optimum operating conditions, or to avoid problems.

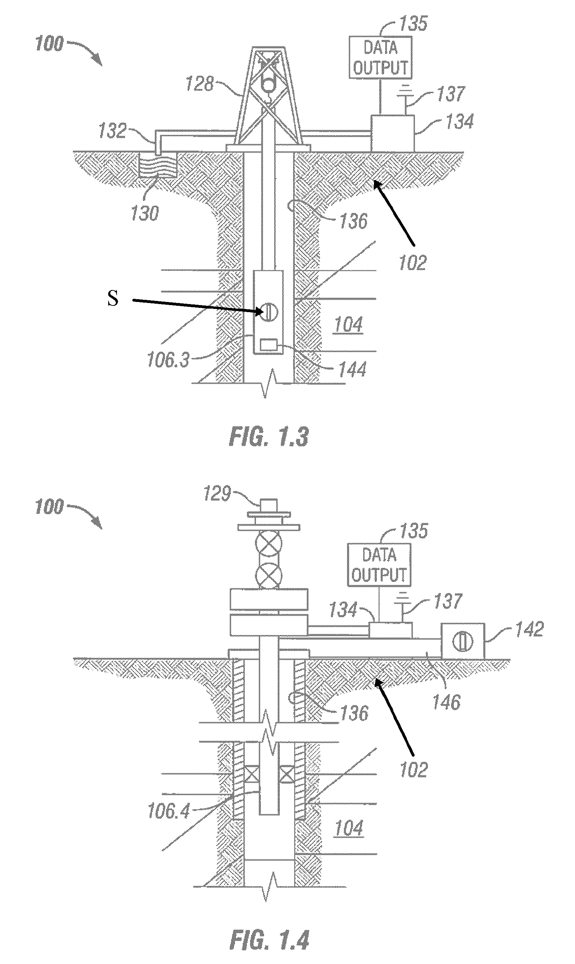

Figure 1.3 illustrates a wireline operation being performed by wireline tool (106.3) suspended by rig (128) and into wellbore (136) of Figure 1.2. The wireline tool may be adapted for deployment into the wellbore for generating well logs, performing downhole tests and/or collecting samples. The wireline tool may be used to provide another method and apparatus for performing a seismic survey operation. The wireline tool may, for example, have an explosive, radioactive, electrical, or acoustic energy source (144) that sends and/or receives electrical signals to surrounding subterranean formations (102) and fluids therein.

Wireline tool (106.3) may be operatively connected to, for example, geophones (118) and a computer (122.1) of a seismic truck (106.1) of Figure 1.1. Wireline tool (106.3) may also provide data to surface unit (134). Surface unit (134) may collect data generated during the wireline operation and may produce data output (135) that may be stored or transmitted and subsequently analyzed. Wireline tool (106.3) may be positioned at various depths in the wellbore (136) to provide information relating to the subterranean formation (102).

Sensors (S), such as gauges, may be positioned about oilfield (100) to collect data relating to various field operations as described previously. Sensors may be positioned in wireline tool (106.3) to measure downhole parameters which relate to, for example porosity, permeability, fluid composition and/or other parameters of the oilfield operation.

Figure 1.4 illustrates a production operation being performed by production tool (106.4) deployed from a production unit or Christmas tree (129) and into completed wellbore (136) for drawing fluid from the downhole reservoirs into surface facilities (142). The fluid flows from reservoir (104) through perforations in the casing (not shown) and into production tool (106.4) in wellbore (136) and to surface facilities (142) via gathering network (146).

Sensors, such as gauges, may be positioned about oilfield (100) to collect data relating to various field operations as described previously. Sensors may be positioned in production tool (106.4) or associated equipment, such as Christmas tree (129), gathering network (146), surface facility (142), and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figures 1.2-1.4 illustrate tools used to measure data relating to an oilfield, it will be appreciated that the tools may be used in connection with non-oilfield operations, such as gas fields, mines, aquifers, storage, or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

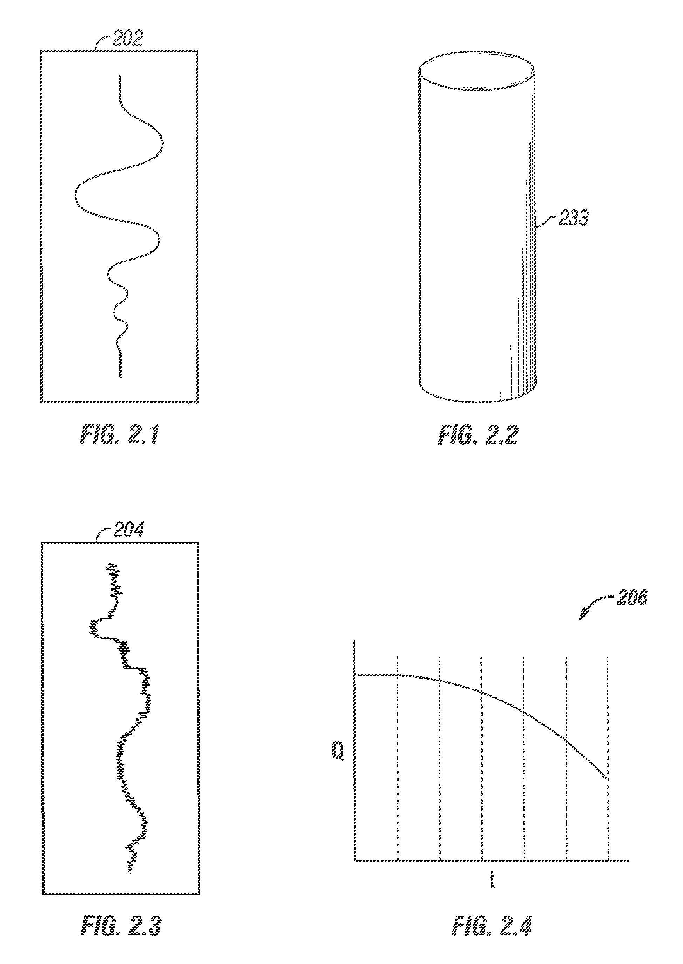

Figures 2.1-2.4 are example graphical depictions of data collected by the tools of Figures 1.1-1.4. Figure. 2.1 depicts a seismic trace (202) of the subterranean formation of Figure 1.1 taken by survey truck (106.1). The seismic trace measures a two-way response over a period of time. Figure 2.2 depicts a core sample (233) taken by the drilling tool (106.2). The core test may provide a graph of the density, resistivity, or other physical property of the core sample (233) over the length of the core. Tests for density and viscosity may be performed on the fluids in the core at varying pressures and temperatures. Figure 2.3 depicts a well log (204) of the subterranean formation of Figure 1.3 taken by the wireline tool (106.3). The wireline log typically provides a resistivity measurement of the formation at various depths. Figure 2.4 depicts a production decline curve (206) of fluid flowing through the subterranean formation of Figure 1.4 taken by the production tool (106.4). The production decline curve (206) may provide the production rate Q as a function of time t.

The respective graphs of Figures 2.1-2.3 contain static measurements that describe the physical characteristics of the formation. These measurements may be compared to determine the accuracy of the measurements and/or for checking for errors. In this manner, the plots of each of the respective measurements may be aligned and scaled for comparison and verification of the properties.

Figure 2.4 provides a dynamic measurement of the fluid properties through the wellbore. As the fluid flows through the wellbore, measurements are taken of fluid properties, such as flow rates, pressures, composition, etc. As described below, the static and dynamic measurements may be used to generate models of the subterranean formation to determine characteristics thereof.

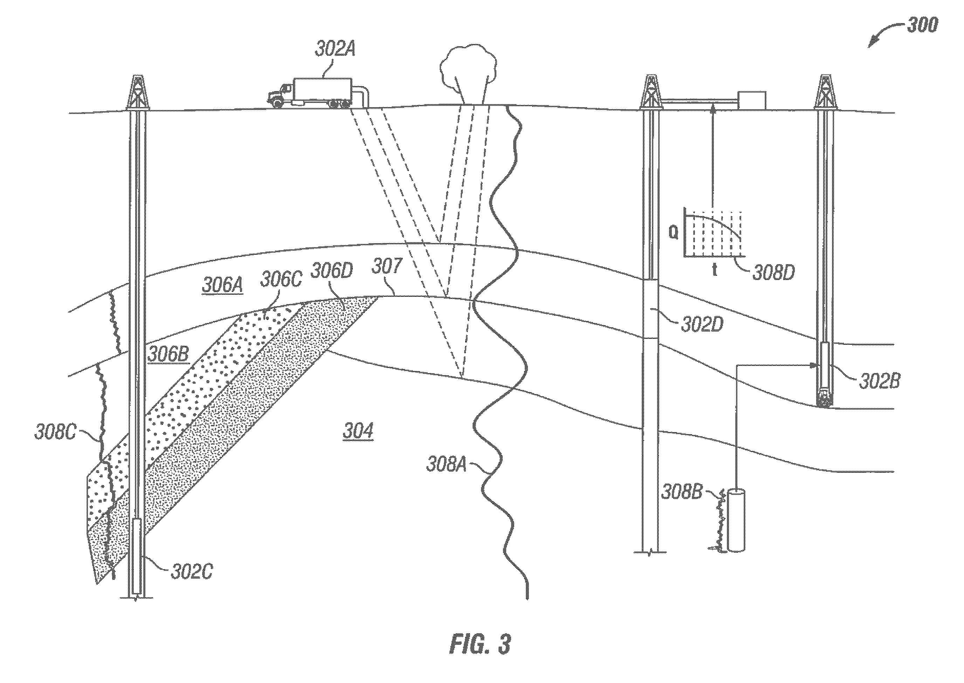

Figure 3 is a schematic view, partially in cross section of an oilfield (300) having data acquisition tools (302A), (302B), (302C), and (302D) positioned at various locations along the oilfield for collecting data of a subterranean formation (304). The data acquisition tools (302A-302D) may be the same as data acquisition tools of Figure 1, respectively. In this example, the data acquisition tools (302A-302D) may generate data plots or measurements (308A-308D), respectively.

Data plots (308A-308D) are examples of static data plots that may be generated by the data acquisition tools (302A-302D), respectively. Static data plot (308A) is a seismic two-way response time and may be the same as the seismic trace (202) of Figure 2.1. Static plot (308B) is core sample data measured from a core sample of the formation (304), similar to the core sample (233) of Figure 2.2. Static data plot (308C) is a logging trace, similar to the well log (204) of Figure 2.3. Data plot (308D) is a dynamic data plot of the fluid flow rate over time, similar to the graph (206) of Figure 2.4. Other data may also be collected, such as historical data, user inputs, economic information, other measurement data, and other parameters of interest.

The subterranean formation (304) has a plurality of geological structures (306A-306D). In this example, the formation has a sandstone layer (306A), a limestone layer (306B), a shale layer (306C), and a sand layer (306D). A fault line (307) extends through the formation. The static data acquisition tools may be adapted to measure the formation and detect the characteristics of the geological structures of the formation.

While a specific subterranean formation (304) with specific geological structures are depicted, it will be appreciated that the formation may contain a variety of geological structures. Fluid may also be present in various portions of the formation. Each of the measurement devices may be used to measure properties of the formation and/or its underlying structures in order to generate oilfield data. While each acquisition tool is shown as being in specific locations along the formation, it will be appreciated that one or more types of measurement may be taken at one or more location across one or more oilfields or other locations for comparison and/or analysis.

The data collected from various sources, such as the data acquisition tools of Figure 3, may then be evaluated using one or more data analysis applications. Seismic data displayed in the static data plot (308A) from the data acquisition tool (302A) may be used by a geophysicist to determine characteristics of the subterranean formation (304). Core data shown in static plot (308B) and/or log data from the well log (308C) may be used by a geologist to determine various characteristics of the geological structures of the subterranean formation (304). Production data from the production graph (308D) may be used by the reservoir engineer to determine fluid flow reservoir characteristics.

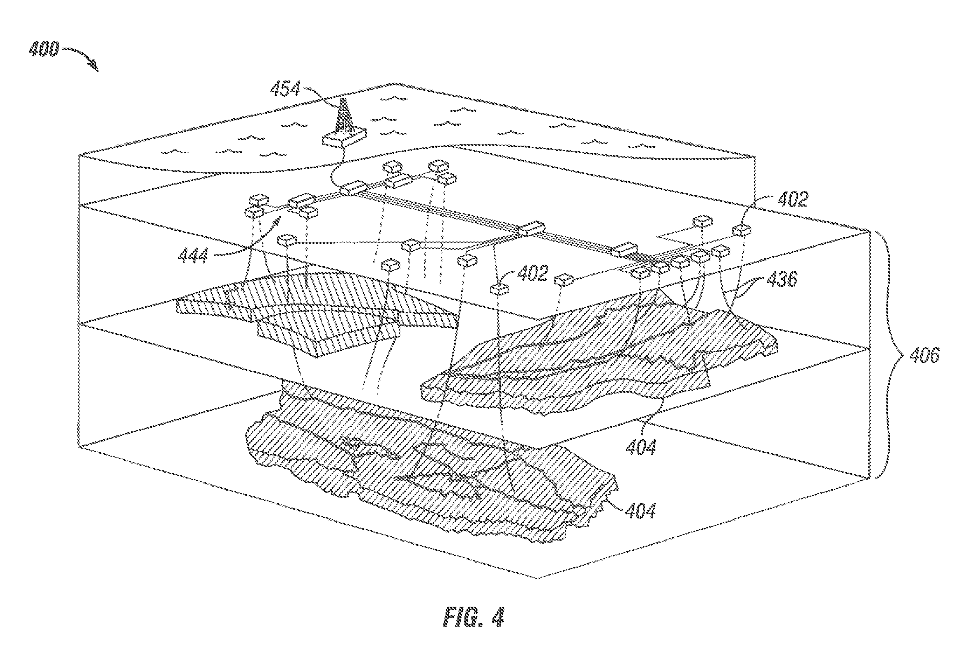

Figure 4 illustrates an example oilfield (400) for performing oilfield operations. In this example, the oilfield has a plurality of wellsites (402) operatively connected to a central processing facility (454). Part or all of the oilfield may be on land and/or sea. Also, while a single oilfield with a single processing facility and a plurality of wellsites is depicted, any combination of one or more oilfields, one or more processing facilities and one or more wellsites may be present.

Each wellsite (402) may have equipment that forms a wellbore (436) into the earth. The wellbores extend through subterranean formations (406) including reservoirs (404). These reservoirs (404) contain fluids, such as hydrocarbons. The wellsites draw fluid from the reservoirs and pass them to the processing facilities via surface networks (444). The surface networks (444) may have tubing and control mechanisms for controlling the flow of fluids from the wellsite to the processing facility (454).

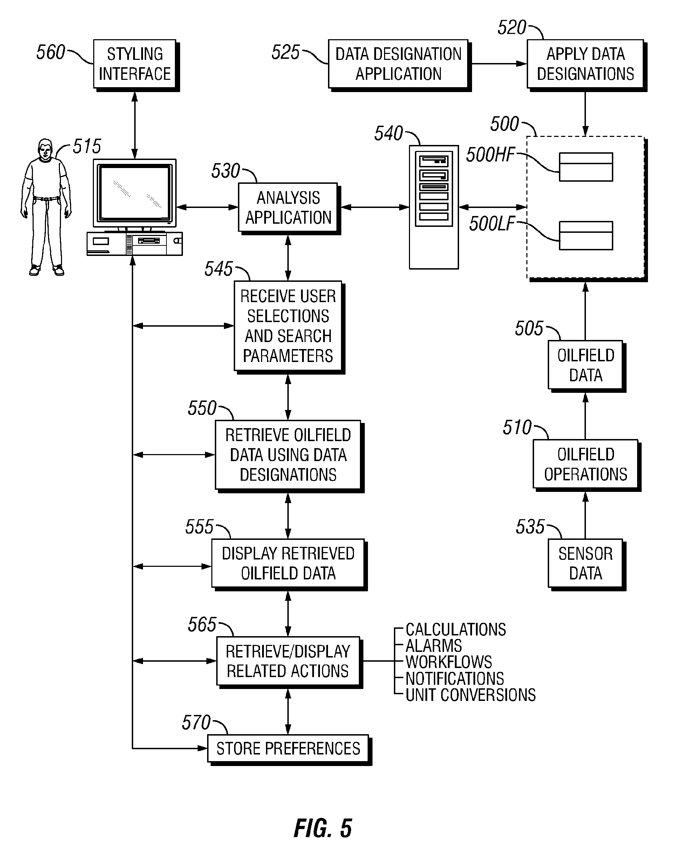

Referring to Figure 5, the present disclosure describes a system, method, and computer readable medium for facilitating the retrieval and analysis of oilfield data. Specifically, the present disclosure describes an efficient and user friendly process through which the user may retrieve oilfield data from one or more computer databases using a unique data designation arrangement, review and fine-tune graphical display(s) of the retrieved oilfield data using any number of styling options and analyze the selected data using a single unified interface.

In one embodiment, one or more computer databases (500) may be utilized for storing oilfield data (505) relating to one or more oilfield operations (510). Oilfield data may include sensor data (535) obtained from one or more sensors (S) positioned throughout the oilfield. Oilfield data may also include data gleaned from one or more supervisory control and data acquisition (SCADA) systems. Oilfield data as described herein may include measured/observed oilfield data and/or simulated oilfield data generated by one or more computer simulation(s).

Limitations of known oilfield data storage systems may make it difficult to efficiently search for and obtain oilfield data of interest. For example, many oilfield operations utilize a first computer database infrastructure (e.g., an SQL database) to store low time-frequency oilfield data and a second database infrastructure (e.g., an OPC-Unified Architecture database) to store high time-frequency oilfield data. The computer database (500) shown in Figure 5 may include a high time-frequency database (500HF) and/or a low time-frequency database (500LF).

In the context of this example, the time-frequency of the oilfield data refers to how often oilfield data is provided to the computer database, thus requiring an input/output operation by the database. In this example, high time-frequency oilfield data may be oilfield data that is provided to the computer database and/or updated at time intervals of less than one hour, e.g., every second, every minute, etc. In this example, low time-frequency oilfield data may be oilfield data that is provided to the computer database and/or updated at time intervals of greater than or equal to one hour, e.g., every two hours, once per day, etc.

The above example describes a situation where a user (515) is required to interact with two distinct storage systems and is not able to easily toggle between them due to the inherent differences in the storage conventions used by each system. For example, a user that wishes to see a monthly production report (i.e., low time-frequency data) would be required to use the search/retrieval functionality associated with the low time-frequency computer database and then switch over to the search/retrieval functionality associated with the high time-frequency database if they wish to view real-time oilfield data, such as sensor level data.

The present disclosure describes a system, method, and computer readable medium capable of providing the user with an oilfield data analysis/visualization application through which the user may seamlessly retrieve and analyze both low and high time-frequency oilfield data using a single interface. While the examples below are in connection with oilfield data, the approaches described herein may be applied to other areas where high frequency data and low frequency data are to be analyzed.

In one embodiment, one or more data designations may be applied to at least a portion of the stored oilfield data, as illustrated by Box (520) of Figure 5. In one embodiment, data designations may include one or more metadata flags applied to one or more pieces of oilfield data.

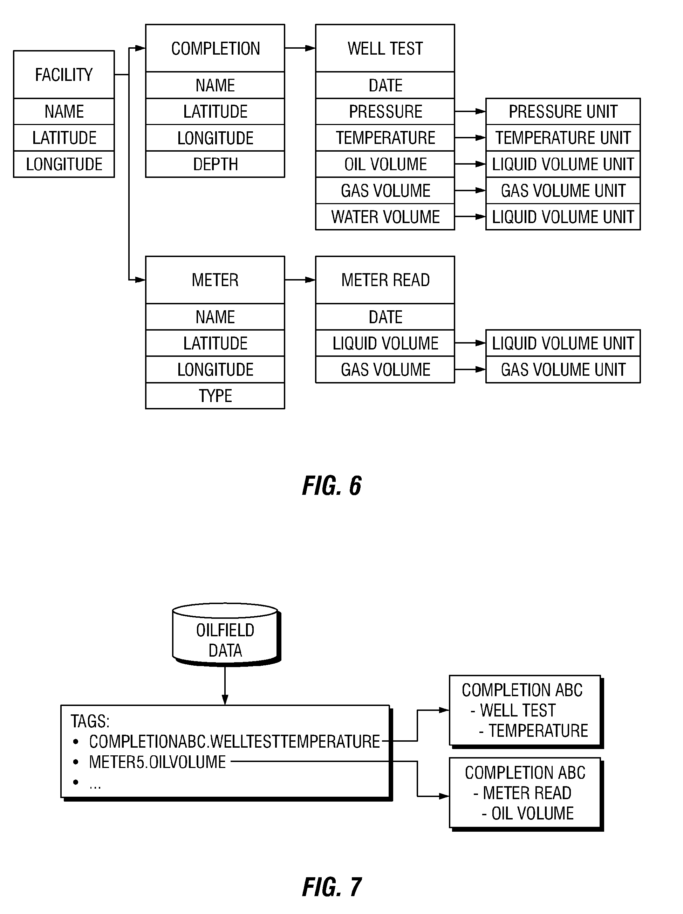

Figure 6 provides an example metadata flag arrangement that may be used in connection with low and high time-frequency oilfield data. In this example, metadata may be associated with particular type(s) of oilfield data items. In the example of Figure 6, a "facility" may be designated as an item and may include the name of the facility as well as properties relating thereto, such as location information (e.g., latitude and longitude values). A "completion" may be designated as an item and associated with the facility where it resides. In this example, metadata information concerning the completion may include its name, as well as properties relating thereto, such as location information (e.g., latitude and longitude values), the depth of the completion, etc.

In this example, a "meter" may be designated as an item and associated with the facility where it resides. In this example, metadata information concerning the meter may include its name, as well as properties relating thereto, such as location information (e.g., latitude and longitude values), the type of meter, etc. Metadata may also be associated with particular transaction(s), task(s) and/or event(s). For example, Figure 6 illustrates a "well test" event that may take place at the identified completion at the identified facility.

In this example, the well test event may include metadata such as the date of the well test as well as properties related to the well test (e.g., pressure, temperature, oil volume, gas volume, water volume, etc). The example of Figure 6 also illustrates a "meter read" event taken at the associated meter. The meter read event may include metadata such as the date of the meter read as well as properties related to the meter read (e.g., liquid volume, gas volume, etc.) Other metadata directed to unit information (e.g., pressure units, temperature units, liquid volume units, gas volume units, etc.) may also be provided.

Associations, represented by the arrows in Figure 6, may also be maintained by the metadata. In this example, the associations capture relationships between items, transactions, units, etc. For example, while a large oilfield operation may conduct numerous well tests, the well test illustrated in Figure 6 may be associated with the facility where the well test took place. Similarly, while a particular facility may have numerous completions, the well test may be associated with a particular completion. The associations may be expressed hierarchically, relationally or through other suitable conventions depending on design requirements and/or the types of associations at issue.

Figure 7 illustrates one example of an association between oilfield data and metadata. The oilfield data may be, for example, data generated by a meter or component in an oilfield. The data generated by the meter may include conventional data tags such as "CompletionABC.WellTestTemperature" and "Meter5.OilVolume" that are associated with the data. The tags may then be associated with one or more metadata flags; for example, "CompletionABC.WellTestTemperature" may be associated with (1) Completion ABC; (2) Well Test; and (3) Temperature. Similarly, the "Meter5.OilVolume" tag may be associated with "Completion ABC", "Meter Read", and "Oil Volume" metadata flags.

In one embodiment, the application of data designations to oilfield data (metadata flags in this example) may be utilized to facilitate information sharing and usage. For example, Metadata may provide a synchronization point for real-time oilfield production systems to facilitate visualization, information sharing, and support for combined high and low time-frequency infrastructures. Further, metadata may be used to facilitate dynamic updating, adding, deleting, and changing metadata through deployment to third parties, to support the addition of new types (items, transactions, etc.), properties, and/or links to suit the needs and requirements of users.

In one embodiment, the data designation structure applied to oilfield data may be generated manually via a data designation application (525) and/or automatically via one or more computer algorithm(s). Further, the system may provide a graphic user interface through which the user may create, amend and/or augment the data designation mapping structure by entering and/or importing custom metadata information. The data designation application may be provided as a component of the data analysis application (530) (described below) or as a separate application as depicted in Figure 5.

In one embodiment, a data designation graphic user interface (DDGUI) (not shown) may be provided through which the user may enter metadata flags and associate them with one or more pieces of oilfield data. In one embodiment, the DDGUI may provide a listing of oilfield data types and pre-defined metadata flags that the user may select and activate as appropriate. In one embodiment, the DDGUI may provide checkboxes, radio buttons and/or other functionality through which the user may select and/or activate metadata flags of interest. Further, the DDGUI may also provide functionality for associating related actions (calculations, notifications, alarms, workflows, etc., described below) to one or more metadata flags.

Suggested mappings may be generated by computer and subjected to user review and approval before finalization. Metadata flagging may occur at any appropriate point in the data pathway; for example, the mapping and flagging may be made by a data historian, in customized software connecting a data historian with a data store, in a data store, or otherwise.

Further, the mappings and associations may be added, removed, or changed dynamically. For example, a user may specify a new metadata flag for a particular type of component. The user may create the new metadata flag and specify how that metadata flag maps to high or low time-frequency data. The user may further define one or more related actions (calculations, alarms, notifications, workflows, unit conversions, etc) that use data associated with the new metadata flag. The framework may dynamically assign the metadata flags to high or low time-frequency data. The metadata flags need not be physically saved, stored, and associated with the particular data point at the time the data point is saved or received.

In one embodiment, a data analysis application capable of providing the user with seamless access to a variety of stored oilfield data sources may be provided, as illustrated by Box (530) of Figure 5. One or more computer servers (540) may be utilized to interface the oilfield data analysis application with the computer database (500).

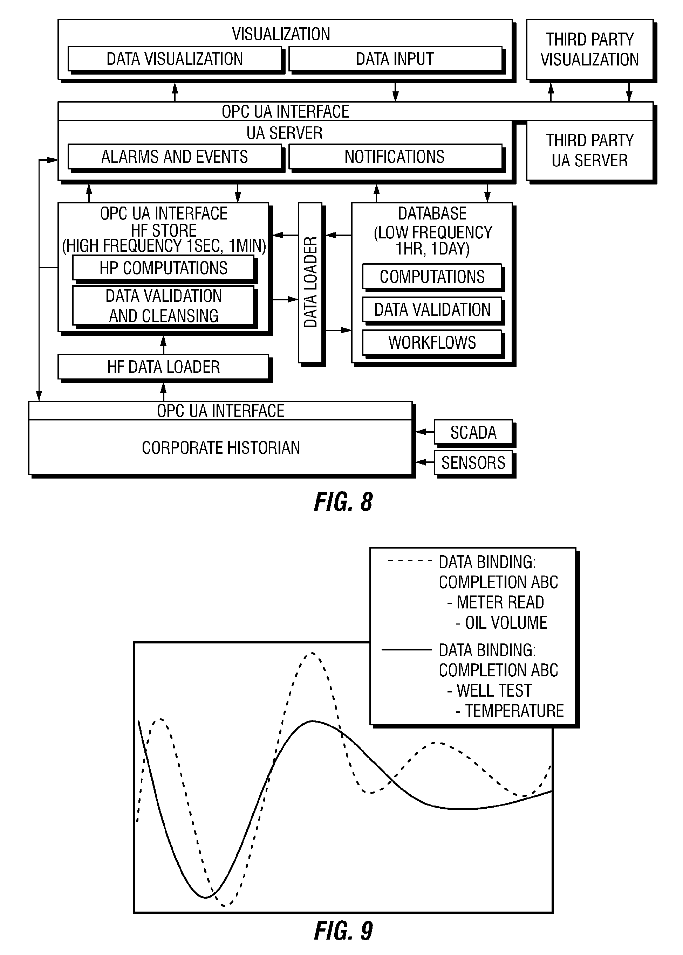

Figure 8 illustrates an example architecture for such a data analysis application. In this example, an OPC-Unified Architecture (OPC-UA) server may be utilized to provide transparent access to model results, aggregated sensor data, etc. Visualization and high level workflows and/or applications may also access stored oilfield data via one or more servers. Although the example server depicted in Figure 8 is an OPC-UA server, other server types may be utilized.

The installation process may be automated such that installation of the application invokes the installer for other components in the framework, such as the high frequency store installer. In the example framework, the Unified Architecture (UA) server may provide data from various sources, including both low and high time-frequency data stores for integration, calculation, and visualization operations.

In one embodiment, the data analysis application may provide the user with seamless access to stored data sources using only the data designation framework (as previously applied to the stored data) as opposed to searching the actual data and/or conventional data tags associated thereto. In this manner, the system allows the user to search for and retrieve stored data from disparate data sources without switching between low and high time-frequency data retrieval architectures. This may allow the user to transparently work with multiple heterogeneous data sources (e.g., low frequency and high frequency) as if they were a single data source. It may further hide differences between low frequency data sources and high frequency data sources such that the user may work against such data sources as if they were uniform.

For example, if the user wishes to generate charts illustrating well reading oilfield data for a particular completion at a particular facility, the user need only enter the name of the facility into the system, wait for the system to search the metadata hierarchy for the requested facility, and then scroll through the search results provided by the system (in this case a hierarchy of information related to the facility at issue) to find the desired completion and well reading data associated thereto. In this example, the data analysis application uses the metadata framework to identify and retrieve the desired oilfield data without the need to search through the oilfield data itself or conventional data storage tags. In this example, the system receives user input data/search parameters and uses them to identify and retrieve oilfield data of interest using only the metadata framework, as illustrated by Boxes (545) and (550) of Figure 5.

In one embodiment, retrieved oilfield data may be used to generate one or more graphical representation(s), as illustrated by Box (555) of Figure 5. In one embodiment, a data visualization application capable of accessing, filtering and displaying oilfield data upon one or more graphic user interfaces may be utilized. The data visualization application may be a stand-alone application, such as the Avocet® system offered by Schlumberger®, or a proprietary data visualization package. Figure 9 provides an example visualization of the temperature and the oil volume of a particular completion ABC. As noted above, the visualization may be associated with the created metadata as opposed to conventional oilfield data tags.

In one embodiment, the selected oilfield data may be displayed to the user using a two, three, or four dimensional arrangement. In one embodiment, a two dimensional arrangement may include x and y axis components, a three dimensional arrangement may include x, y, and z components, and a four dimensional arrangement may include x, y, z components along with a time component. Oilfield data may be represented utilizing any number of conventions. For example, various color schemes may be utilized to convey the characteristics of the displayed oilfield data.

In one embodiment, the user may further refine the graphical representation(s) of selected oilfield data using a styling interface, as illustrated by Box (560) of Figure 5. In one embodiment, a unique styling interface may be provided for various types of data visualizations in order to allow the user to adjust how retrieved oilfield data is displayed. For example, the user may wish to define styling items such a background color(s) and/or fill styles, splitting parameter(s), margin size(s), display theme(s), fill style(s), line color(s), bubble color(s) and/or sizing restriction(s), unit selection(s), scale(s), percentage(s), grid size(s), polygon sizing/usage, labeling parameter(s), etc. In one embodiment, one or more styling interfaces may be displayed to the user after he or she has selected the retrieved oilfield data to be displayed.

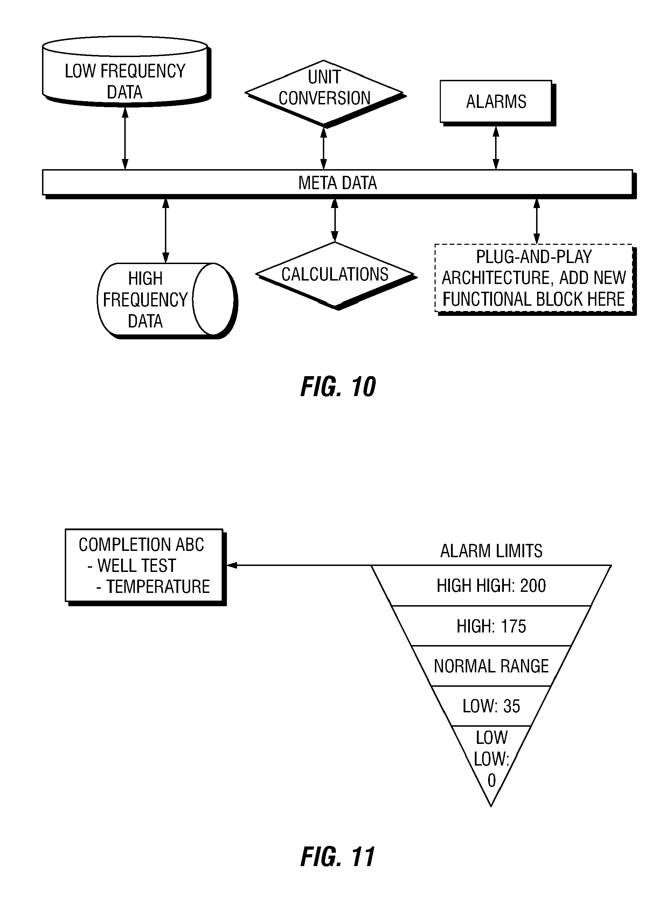

In one embodiment, the metadata, and its association(s) with the oilfield data, may facilitate the retrieval and display of related actions such as calculations, alarms, workflows, notifications and unit conversions, as illustrated by Box (565) of Figure 5. Such actions may themselves generate additional data that may then be flagged with appropriate metadata. Figure 10 provides an example application and association of data designations (metadata in this example) to low and high time-frequency oilfield data and other related actions.

In one embodiment, calculations relating to the retrieved oilfield data may be identified using one or more data designation arrangements and displayed in conjunction with the retrieved oilfield data. For example, the type of oilfield data provided to the user may lend itself to certain calculations that may be applicable to the user's inquiry. In one embodiment, the calculation may be provided to the user and data (or variables in this example) may be automatically populated into the calculations so that the user may review calculation data pertaining to the retrieved oilfield data. In one embodiment, the system may provide one or more verification screens (not shown) through which the user may view metadata flags associated with the calculation(s) and the variables being used therein.

Workflows relating to the retrieved oilfield data may also be identified using one or more data designation arrangements and displayed in conjunction with the retrieved oilfield data. For example, the type of oilfield data provided to the user may lend itself to certain workflows that may be applicable to the user's inquiry. In one embodiment, the workflows may be provided to the user and applicable data may be automatically populated into the workflow so that the user may initiate the workflow using the retrieved oilfield data. In one embodiment, the system may provide one or more verification screens (not shown) through which the user may view metadata flags associated with the workflows(s) and the oilfield data being used therein.

Alarms relating to the retrieved oilfield data may also be identified using one or more data designation arrangements and displayed in conjunction with the retrieved oilfield data. For example, the type of oilfield data provided to the user may lend itself to certain alarms that may be applicable to the user's inquiry. In one embodiment, the alarms may be provided to the user and applicable data may be automatically populated into the alarm so that the alarm may be presented to the user to alert him or her to items of significance to the retrieved oilfield data. One or more recommended solutions may also be displayed in response to an alarm condition. In one embodiment, the system may provide one or more verification screens (not shown) through which the user may view metadata flags associated with the alarm(s) and the oilfield data being used therein.

Figure 11 illustrates an example of associating alarm actions with metadata. A particular alarm may have certain conditions; in the example shown, the alarm calculation specifies a range of values for the completion ABC well test's temperature. The alarm may specify a normal range, a "high" and "low" range outside the normal range, and a critical "high high" and "low low" range. The alarm condition may specify particular actions that occur if the temperature falls within certain ranges. For example, a temperature in the "high" range may cause a notification to be displayed on a user's screen, while a "high high" value may trigger warnings to multiple users or cause other appropriate actions to take place. In this example, appropriate actions may include shutting down and/or altering one or more of the oilfield operations in question. One or more watchdog alarms may also be associated with metadata flags and used to alert the user to data loss and/or data integrity issues.

One or more notifications relating to the retrieved oilfield data may also be identified using one or more data designation arrangements and displayed in conjunction with the retrieved oilfield data. For example, the type of oilfield data provided to the user may lend itself to certain notifications that may be applicable to the user's inquiry. In one embodiment, the notifications may be provided to the user in order to alert him or her to items of significance to the retrieved oilfield data. In one embodiment, the system may provide one or more verification screens (not shown) through which the user may view metadata flags associated with the notification(s) and the oilfield data being used therein.

One or more unit conversions relating to the retrieved oilfield data may also be identified using one or more data designation arrangements and displayed in conjunction with the retrieved oilfield data. For example, the type of oilfield data provided to the user may lend itself to certain unit conversions that may be applicable to the user's inquiry. In one embodiment, the unit conversions may be provided to the user. In one embodiment, the system may provide one or more verification screens (not shown) through which the user may view metadata flags associated with the unit conversions and the oilfield data being used therein.

Related actions may be logged, tracked and/or reported in order to generate statistical information and/or trends relating to the oilfield data and its utilization by the user. In one embodiment, one or more reporting screens (not shown) may be provided to the user in order to display such information.

In one embodiment, the user's interaction with the system may result in changes to the oilfield operation itself. For example, if the retrieved oilfield data (or a related action) indicates that a component of an oilfield operation is not functioning properly, a ticket and/or work order may be generated. In this example, a ticket may be request for an oilfield worker to manually adjust a parameter of the oilfield operation, such as a valve and/or other control functionality. Further, certain conditions (or a request by the user) may result in a signal being sent to oilfield control functionality (such as the surface unit (134) described above) directing it to alter one or more parameters of the oilfield operation.

In the above examples, the metadata allows other functions to be easily implemented within the framework by defining the oilfield data the function will seek, use, and generate in terms of the existing or new metadata designations. This may facilitate easier and more seamless development by providing a level of abstraction that hides the complexity of dealing with combined low and high time-frequency data sources from the function. In this fashion, the metadata may facilitate information sharing, generation, and usage throughout the system. This feature is not limited to the example related actions described herein and may be applied to any number of actions at the discretion of the user (e.g., plug and play architectures). Related actions may be displayed to the user in conjunction with oilfield data retrieved by the system. Further, related action selection fields and/or other functionality for receiving user input regarding related actions may be provided by the DDGUI (described above) or via other suitable interface.

In one embodiment, the system may apply one or more data cleansing algorithms to retrieved oilfield data before such data is applied to related actions. This feature allows the system to ensure data quality prior to utilizing the data for a related action (e.g., calculations, workflows, alarms, etc).

The actions on the metadata may provide greater flexibility than operations based on conventional data tags. For example, an action that displays the total oil volume at a particular location with multiple completions is isolated from some of the complexity of adding, removing, and changing completions at that location. If a new completion is added at the location, that new completion is associated with the metadata and the calculation may account for the new completion without changes to the action itself; since the calculation is tied to the metadata, and the metadata is provided dynamically for the new completion, once the appropriate metadata mappings are made the calculation can dynamically account for the addition. Similar adjustments may be made for deletions and modifications of the metadata framework.

In one embodiment, user selections and/or styling preferences may be stored for later projects, as illustrated by Box (570) of Figure 5. For example, if a user has selected oilfield data and styling preferences for a particular oilfield data type or project, the system may store preference information for the user and/or project in question and apply it to later sessions.

In one embodiment, one or more oilfield data display boxes may be equipped with one or more search bars to allow the user to conduct key word searching. In one embodiment, one or more of the search bars may include an auto-complete feature capable of predicting a word or phrase that the user wants to type in without the user actually typing it in completely.

In one embodiment, checkboxes may be provided upon the graphic user interface in order to allow the user to select multiple sets of oilfield data. For example, check boxes and/or radio buttons may be provided to increase user efficiency in selecting oilfield data for display. In this example, the system may provide checkmark boxes for oilfield data elements where the user may select multiple items and radio buttons for oilfield elements where only one of a group of items may be selected.

The system may provide customization options whereby the user may amend default display options by entering and/or importing custom display preferences. In one embodiment, this may be accomplished using one or more customization screens (not shown). This feature may also be used to allow the user to enter custom oilfield data and/or metadata so that highly trained users may tailor the system to their specifications using custom oilfield data and/or custom metadata mapping structures.

The system, method and computer readable medium described herein may be utilized in conjunction with any suitable visualization package and the inventions described herein are not limited to use with the example oilfield data types or example data visualization packages. Further, the inventions described herein may be used at any phase of an oilfield operation including, but not limited to, during the interpretation of seismic data, during modeling of formational characteristics or reservoir properties (including surface modeling), and/or during operational monitoring and analysis activities.

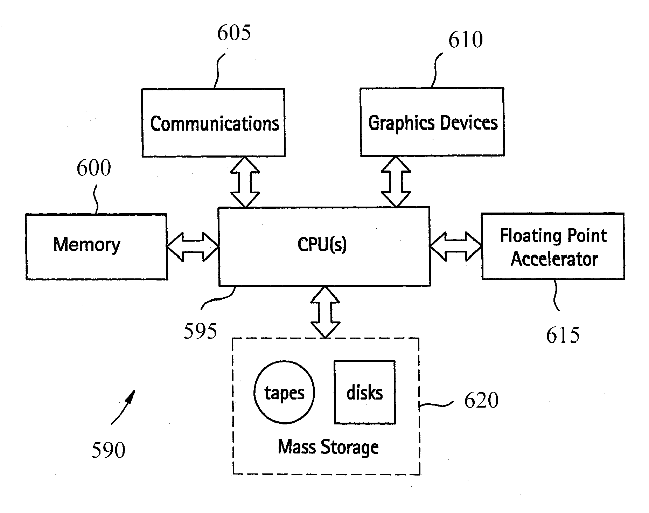

The methods described herein may be implemented on any suitable computer system capable of processing electronic data. Figure 12 illustrates one possible configuration of a computer system (590) that may be utilized. Computer system(s), such as the example system of Figure 12, may run programs containing instructions, that, when executed, perform methods according to the principles described herein. Furthermore, the methods described herein may be fully automated and able to operate continuously, as desired.

The computer system may utilize one or more central processing units (595), memory (600), communications or I/O modules (605), graphics devices (610), a floating point accelerator (615), and mass storage devices such as tapes and discs (620). Storage device (620) may include a floppy drive, hard drive, CD-ROM, optical drive, or any other form of storage device. In addition, the storage devices may be capable of receiving a floppy disk, CD-ROM, DVD-ROM, disk, flash drive or any other form of computer-readable medium that may contain computer-executable instructions.

Further, communication device (605) may be a modem, network card, or any other device to enable communication to receive and/or transmit data. It should be understood that the computer system (590) may include a plurality of interconnected (whether by intranet or Internet) computer systems, including without limitation, personal computers, mainframes, PDAs, cell phones and the like.

It should be understood that the various technologies described herein may be implemented in connection with hardware, software or a combination of both. Thus, various technologies, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various technologies.

In the case of program code execution on programmable computers, the computing device may include a processor, a storage medium readable by the processor (including volatile and non-volatile memory and/or storage elements), at least one input device, and at least one output device. One or more programs that may implement or utilize the various technologies described herein may use an application programming interface (API), reusable controls, and the like.

Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

The computer system (590) may include hardware capable of executing machine readable instructions, as well as the software for executing acts that produce a desired result. In addition, computer system (590) may include hybrids of hardware and software, as well as computer sub-systems.

Hardware may include at least processor-capable platforms, such as client-machines (also known as personal computers or servers), and hand-held processing devices (such as smart phones, personal digital assistants (PDAs), or personal computing devices (PCDs), for example). Further, hardware may include any physical device that is capable of storing machine-readable instructions, such as memory or other data storage devices. Other forms of hardware include hardware sub-systems, including transfer devices such as modems, modem cards, ports, and port cards, for example.

Software includes any machine code stored in any memory medium, such as RAM or ROM, and machine code stored on other devices (such as floppy disks, flash memory, or a CD ROM, for example). Software may include source or object code, for example. In addition, software encompasses any set of instructions capable of being executed in a client machine or server.

A database may be any standard or proprietary database software, such as Oracle, Microsoft Access, SyBase, or DBase II, for example. The database may have fields, records, data, and other database elements that may be associated through database specific software. Additionally, data may be mapped. Mapping is the process of associating one data entry with another data entry. For example, the data contained in the location of a character file can be mapped to a field in a second table. The physical location of the database is not limiting, and the database may be distributed. For example, the database may exist remotely from the server, and run on a separate platform.

Further, the computer system may operate in a networked environment using logical connections to one or more remote computers. The logical connections may be any connection that is commonplace in offices, enterprise-wide computer networks, intranets, and the Internet, such as local area network (LAN) and a wide area network (WAN). The remote computers may each include one or more application programs.

When using a LAN networking environment, the computer system may be connected to the local network through a network interface or adapter. When used in a WAN networking environment, the computer system may include a modem, wireless router or other means for establishing communication over a wide area network, such as the Internet.

The modem, which may be internal or external, may be connected to the system bus via the serial port interface. In a networked environment, program modules depicted relative to the computer system, or portions thereof, may be stored in a remote memory storage device.

Although the invention has been described with reference to specific embodiments, this description is not meant to be construed in a limited sense. Various modifications of the disclosed embodiments, as well as alternative embodiments of the invention, will become apparent to persons skilled in the art upon reference to the description of the invention. It is, therefore, contemplated that the appended claims will cover such modifications that fall within the scope of the invention.

## Claims

1. A method of facilitating the retrieval and analysis of oilfield data (505), said method comprising:
storing oilfield data (505) pertaining to one or more oilfield operations (510) to a computer database (500);
applying (520) one or more data designations to the oilfield data (505); and
retrieving (550) at least a portion of the stored oilfield data from the computer database (500) using only the data designations.

2. The method of claim 1, wherein the data designations applied (520) to the oilfield data (505) comprise one or more metadata flags.

3. The method of claim 1, wherein the computer database (500) comprises a first database (500HF) containing high time-frequency oilfield data and a second database (500LF) containing low time-frequency oilfield data.

4. The method of claim 3, wherein the first computer database (500HF) comprises an OPC-Unified Architecture database and the second computer database (500LF) comprises an SQL database.

5. The method of claim 1, wherein the oilfield data (505) further comprises high time-frequency oilfield data and low time-frequency oilfield data.

6. The method of claim 1, further comprising displaying (555) at least a portion of the retrieved (550) oilfield data (505) upon a graphic user interface coupled to the computer database (500).

7. A data retrieval and analysis apparatus comprising:
a processor (595) operative to:
store data pertaining to one or more operations (510) to a computer database (500) coupled to the processor (595), wherein the data includes high time-frequency data and low time-frequency data;
search for and retrieve (550) stored data using one or more data designations applied (520) to the data; and
display (555) at least a portion of the retrieved (550) data upon a graphic user interface coupled to the computer database (500).

8. The apparatus of claim 7, further comprising a styling tool (560) through which a user (515) may adjust display settings for the retrieved (550) data.

9. The apparatus of claim 7, wherein the data further comprises high time-frequency data and low time-frequency data.

10. The apparatus of claim 7, wherein the data designations further comprise item and event designations.

11. A tangible computer readable medium for facilitating the retrieval and analysis of oilfield data (505) comprising instructions which, when executed, cause a computing device (590) to:
store oilfield data (505) pertaining to one or more oilfield operations (510) to a computer database (500);
apply (520) one or more data designations to the oilfield data (505);
retrieve (550) at least a portion of the stored oilfield data from the computer database (500) using only the data designations; and
display (555) at least a portion of the retrieved (550) oilfield data (500) upon a graphic user interface coupled to the computer database (500).

12. The tangible computer readable medium of claim 11, wherein the instructions, when executed, cause the computing device (590) to:
associate a calculation with one or more of the data designations and display (565) the associated calculation upon the graphic user interface in conjunction with the retrieved (550) oilfield data (505).

13. The tangible computer readable medium of claim 11, wherein the instructions, when executed, cause the computing device (595) to:
associate an alarm with one or more of the data designations and display (565) the associated alarm upon the graphic user interface in conjunction with the retrieved (550) oilfield data (505).

14. The tangible computer readable medium of claim 11, wherein the instructions, when executed, cause the computing device (595) to:
associate a workflow with one or more of the data designations and display (565) the associated workflow upon the graphic user interface in conjunction with the retrieved (550 oilfield data (505).

15. The tangible computer readable medium of claim 11, wherein the instructions, when executed, cause the computing device (595) to:
associate a notification with one or more of the data designations and display (565) the associated notification upon the graphic user interface in conjunction with the retrieved (550) oilfield data (500).
